# EUROPÄISCHE PATENTSCHRIFT

(11) **EP 2 222 517 B1**
(45) Veröffentlichungstag und Bekanntmachung des Hinweises auf die Patenterteilung: **26.12.2012**
(21) Anmeldenummer: 08852277.6
(22) Anmeldetag: 20.11.2008
(51) Int. Cl.: B60R 21/231, B60R 21/237, B60R 21/233

(54) **GASSACK MIT EINEM EINFÜLLSTUTZEN UND GASSACKANORDNUNG MIT EINEM GASSACK UND EINEM GASGENERATOR**
GAS BAG COMPRISING A FILLER NECK, AND GAS BAG ARRANGEMENT COMPRISING A GAS BAG AND A GAS GENERATOR
SAC GONFLABLE POURVU D'UNE TUBULURE DE REMPLISSAGE ET DISPOSITIF COMPRENANT UN SAC GONFLABLE ET UN GÉNÉRATEUR DE GAZ

(30) Priorität: 20.11.2007 DE 102007056137
(43) Veröffentlichungstag der Anmeldung: 01.09.2010
(73) Patentinhaber: Takata AG, 63743 Aschaffenburg (DE)
(72) Erfinder: BAUMGARTNER, Peter, 89312 Günzburg (DE); STECK, Thomas, 89275 Elchingen (DE); LEIFHEIT, Markus, 86485 Bieberbach/Affalten (DE)
(74) Vertreter: Müller, Wolfram Hubertus
(86) Internationale Anmeldenummer: PCT/EP2008/065939
(87) Internationale Veröffentlichungsnummer: WO 2009/065907

(56) Entgegenhaltungen:
- EP-A- 1 273 486
- EP-A- 1 826 072
- DE-A1-102007 016 038
- DE-U1-202004 016 975
- GB-A- 2 314 300
- GB-A- 2 399 795
- US-A- 5 560 645
- US-A1- 2008 136 143
- ANONYMOUS: "Fabric diffuser panel for air bag module" RESEARCH DISCLOSURE, MASON PUBLICATIONS, HAMPSHIRE, GB, Bd. 440, Nr. 115, 1. Dezember 2000 (2000-12-01), XP007127300 ISSN: 0374-4353

## Beschreibung

Die Erfindung betrifft einen Gassack mit einem Einfüllstutzen gemäß dem Oberbegriff des Anspruchs 1.

Es ist bekannt, zur Befüllung eines Gassacks eines Fahrzeuginsassen-Rückhaltesystems mit Gas einen Einfüllstutzen an dem Gassack auszubilden, über den der Gassack mit dem Gas eines Gasgenerators befüllbar ist. Ein Problem derartiger Anordnungen besteht darin sicherzustellen, dass der Gassack durch die einströmenden Gase nicht beschädigt wird.

Aus der GB 2 314 300 A ist ein gattungsgemäßer Gassack mit einem in Längsrichtung gestülptem Bereich bekannt, der mehrere Gasautrittsöffnungen bereitstellt, wobei das Ende des gestülpten Bereichs als offenes Ende ausgebildet ist.

Der vorliegenden Erfindung liegt die Aufgabe zugrunde, einen Gassack mit einem Einfüllstutzen bereitzustellen, der in einfacher Weise eine Befüllung eines Gassacks mit Gas ermöglichen, wobei die thermische Belastung des Gassacks gering sein soll.

Diese Aufgabe wird durch einen Gassack mit den Merkmalen des Anspruchs 1 gelöst. Ausgestaltungen der Erfindung sind in den Unteransprüchen angegeben.

Danach ist vorgesehen, den Einfüllstutzen eines Gassacks durch Stülpen eines schlauchförmigen Bereichs des Gassacks zu bilden. Der Einfüllstutzen eines herkömmlichen Gassacks wird dabei gewissermaßen verlängert und nach innen gestülpt. Auf diese Weise erhält der Gassack eine zusätzliche Schutzlage im Einfüllstutzen, ohne dass zur Bereitstellung der zusätzlichen Lage Gassackmaterial getrennt ausgeschnitten, genäht und nachträglich in dem Gassack montiert werden müsste. Die Montage ist somit einfach, da der gestülpte Einfüllstutzen aus dem Gassackmaterial des Gassacks besteht und ohne gesonderte Teile auskommt.

Die zusätzliche Schutzlage verhindert, dass unmittelbar nach dem Austritt des Gases aus dem Gasgenerator das heiße Gas in Kontakt mit der Außenhaut des Gassackgewebes tritt, so dass das einströmende Gas den Gassack nicht oder nur geringfügig beschädigt.

Am Ende des schlauchförmigen Bereichs ist erfindungsgemäß mindestens eine Naht ausgebildet, die zwei Gasaustrittsöffnungen definiert, wobei das Ende des schlauchförmigen Bereichs durch diese mindestens eine Naht zumindest teilweise verschlossen ist.

Ein gestülpter Einfüllstutzen kann sowohl bei genähten als auch bei geklebten oder gewebten Luftsäcken eingesetzt werden.

In einer Ausgestaltung der Erfindung reicht das Ende des schlauchförmigen Bereiches, das nach dessen Umstülpen dem Gassackinneren zugewandt ist, bis in das Gassackinnere hinein. Hierdurch wird ermöglicht, dass das durch den Einfüllstutzen in den Gassack strömende Gas unmittelbar in das Gassackinnere strömt und dort geeignet verteilt werden kann.

Es ist vorgesehen, dass das nach dem Umstülpen des schlauchförmigen Bereichs dem Gassackinneren zugewandte Ende des schlauchförmigen Bereichs Mittel umfasst, die bewirken, dass die Gase gerichtet in den Gassack einströmen, beispielsweise um eine gleichmäßige Befüllung des Gassackes zu gewährleisten. Hierzu ist vorgesehen, dass seitlich oder am Ende des schlauchförmigen Bereichs, das nach dessen Umstülpen dem Gassackinneren zugewandt ist, ein oder mehrere Nähte ausgebildet sind, die Öffnungen definieren, die bei einer Befüllung des Gassacks das einströmende Gas gezielt im Gassack verteilen.

Es kann vorgesehen sein, dass das Ende des schlauchförmigen Bereiches schräg in Bezug auf die Längsausdehnung des schlauchförmigen Bereiches ausgebildet ist, wodurch die Einströmrichtung weiter beeinflusst werden kann.

In einer weiteren Ausgestaltung besitzt der Gassack eine sich längs erstreckende Außenkante und verläuft der schlauchförmige Bereich vor seinem Umstülpen im Wesentlichen parallel zu dieser Außenkante. Dies ermöglicht es, den Gassackzuschnitt, der zur Herstellung des Gassacks verwendet wird, in der Höhe gleich zu halten im Vergleich zu Gassäcken, die einen einfachen Einfüllstutzen ohne zusätzliche umgestülpte Schutzlage aufweisen. Durch eine gleich bleibende Höhe des Gassackzuschnittes wird erreicht, dass keine zusätzlichen Materialkosten entstehen.

In einer weiteren Ausgestaltung ist vorgesehen, dass der schlauchförmige Bereich des Gassacks mindestens eine zusätzliche Verstärkungslage aufweist, die beim Umstülpen zumindest teilweise ebenfalls umgestülpt wird. Hierzu werden beispielsweise zwei zusätzliche Gewebestücke auf die Ober- und Unterseite des schlauchförmigen Bereiches genäht oder geklebt. Anschließend wird der schlauchförmige Bereich zusammen mit diesen zusätzlichen Gewebestücken umgestülpt. Dies führt zu einer weiteren Verstärkung des Einfüllstutzens durch Bereitstellen einer weiteren Schutzlage zumindest in Abschnitten des Einfüllstutzens. Dabei kann auch vorgesehen sein, dass die zusätzliche Verstärkungslage aus einem anderen Material besteht als der Gassack und beispielsweise in besonderem Maße thermisch belastbar ist. Grundsätzlich können auch mehrere solcher zusätzlicher Verstärkungslagen, ggf. aus verschiedenen Materialien, auf dem schlauchförmigen und umzustülpenden Bereich des Gassacks befestigt werden.

In einer weiteren Ausgestaltung sind Bereiche der mindestens einen zusätzlichen Gewebelage derart miteinander verbunden, dass sie das Ende des schlauchförmigen Bereichs teilweise verschließen. Die nicht verschlossenen Bereiche bilden dabei eine oder mehrere Öffnungen, die nach Umstülpen des schlauchförmigen Bereichs bei einer Befüllung des Gassacks das einströmende Gas gezielt im Gassack verteilen.

Der Gassack ist in einer Ausführungsvariante derart ausgebildet, dass er zur Aufnahme zumindest eines Abschnitts eines Gasgenerators oder zur Aufnahme zumindest eines Abschnitts eines Diffusors, der mit einem Gasgenerator verbunden ist, geeignet ist.

Der Einfüllstutzen wird wie bereits ausgeführt durch Umstülpen eines schlauchförmigen Bereichs in Längsrichtung gebildet. Das vom Gassack abstehende Ende des schlauchförmigen Bereichs wird dabei in das Gassackinnere gezogen.

Der Einfüllstutzen und der schlauchförmige Bereich sind integraler Bestandteil des Gassacks. Damit handelt es sich insbesondere nicht um eine Gaslanze, die lediglich in einen Gassack eingesetzt wird. Beispielsweise ist der schlauchförmige Bereich Bestandteil des Gassackzuschnitts, aus dem der Gassack hergestellt ist. In einer anderen Ausführungsvariante kann vorgesehen sein, dass der schlauchförmige Bereich ein mit dem Gassack fest verbundenes, insbesondere vernähtes oder verklebtes Teil ist. Dieses kann aus einem anderen, insbesondere stärkeren Gassackgewebe oder aus einem anderen Material als der Gassack bestehen, so dass der Einfüllstutzen in besonders stabiler oder hitzebeständiger Weise ausführbar ist.

Der gestülpte schlauchförmige Bereich bildet im Gassackinneren einen Diffusor aus, der Gas eines Gasgenerators gezielt im Gassack verteilt.

Die Herstellung eines Gassacks mit einem gestülpten Einfüllstutzen erfolgt beispielsweise unter Einsatz der folgenden Schritte:
- Bereitstellen zweier zweidimensionaler Gassacklagen, die jeweils einen sich längs erstreckenden, seitlich abstehenden Bereich aufweisen,
- Verbinden der beiden Gassacklagen, wobei die beiden sich längs erstreckenden, seitlich abstehenden Bereiche einen an seinem Ende zumindest teilweise offenen schlauchförmigen Bereich bilden, und
- Umstülpen des schlauchförmigen Bereich zur Bildung eines Einfüllstutzens des Gassacks.

Die Herstellung eines Gassacks mit einem gestülpten Einfüllstutzen erfolgt in einem alternativen Herstellungsverfahren unter Einsatz der folgenden Schritte:
- Bereitstellen eines Gassacks mit einer Öffnung,
- Bereitstellen eines schlauchförmigen Teils,
- Verbinden des schlauchförmigen Teils mit dem Gassack im Bereich der Öffnung des Gassacks, und
- Stülpen des schlauchförmigen Bereichs zur Bildung eines Einfüllstutzens des Gassacks.

Die Erfindung wird nachfolgend unter Bezugnahme auf die Figuren der Zeichnung anhand mehrer Ausführungsbeispiele näher erläutert. Es zeigen:
- Fig. 1: ausschnittsweise einen ausgebreiteten, nicht aufgeblasenen Gassack mit einem gemäß einem ersten Ausführungsbeispiel ausgebildeten Einfüllstutzen;
- Fig. 2: einen bekannten Gassack mit einem Einfüllstutzen;
- Fig. 3: einen Gassack mit einem Einfüllstutzen gemäß Fig. 1, wobei der Gassack in einem Fertigungsschritt dargestellt ist, in dem er einen schlauchförmigen Bereich ausbildet, der nach Umstülpen den Einfüllstutzen der Fig. 1 bildet;
- Fig. 4: den Gassack im Fertigungszustand der Fig. 3, wobei der Vorgang des Umstülpens des schlauchförmigen Bereichs angedeutet ist;
- Fig. 5: einen Gassack und einen Einfüllstutzen gemäß der Fig. 1, wobei in dem gestülpten Einfüllstutzen ein Gasgenerator angeordnet ist und der Einfüllstutzen eine Gasverteilungsfunktion erfüllt;
- Fig. 6: einen Gassack mit einem Einfüllstutzen gemäß der Fig. 1, wobei in dem Einfüllstutzen ein Gasgenerator angeordnet ist und der Einfüllstutzen zur Einleitung von Gas in den Gassack ohne eine Gasverteilungsfunktion ausgebildet ist;
- Fig. 7: einen Gassack mit einem Einfüllstutzen gemäß der Fig. 5, wobei in dem Einfüllstutzen ein mit einem Gasgenerator verbundener zusätzlicher Diffusor angeordnet ist;
- Fig. 8A: einen Gassack in einem Fertigungszustand gemäß der Fig. 3, wobei eine zusätzliche Verstärkungslage an der Außenseite des schlauchförmigen Bereichs angeordnet wird;
- Fig. 8B: den Gassack der Fig. 8A, wobei die Verstärkungslage an dem schlauchförmigen Bereich angenäht und das Umstülpen des Bereichs mit der Verstärkungslage angedeutet ist;
- Fig. 8C: einen Gassack mit einem Einfüllstutzen, der durch Umstülpen des schlauchförmigen Bereichs mit Verstärkungslage der Fig. 8B gebildet ist;
- Fig. 8D: den Gassack der Fig. 8C mit einem in dem Einfüllstutzen angeordneten und mit diesem verbundenen Gasgenerator;
- Fig. 9A: ein erstes Ausführungsbeispiel eines Gewebe-Schutzelementes, das an einem Gasgenerator montierbar ist;
- Fig. 9B: das an einem Gasgenerator montierte Gewebe-Schutzelement der Fig. 9A;
- Fig. 10A: ein zweites Ausführungsbeispiel eines Gewebe-Schutzelementes, das an einem Gasgenerator montierbar ist;
- Fig. 10B: das an einem Gasgenerator montierte Gewebe-Schutzelement der Fig. 10A;
- Fig. 11A: ein drittes Ausführungsbeispiel eines Gewebe-Schutzelementes, das an einem Gasgenerator montierbar ist;
- Fig. 11 B: das an einem Gasgenerator montierte Gewebe-Schutzelement der Fig. 11A;
- Fig. 12A: ein viertes Ausführungsbeispiel eines Gewebe-Schutzelementes, das an einem Gasgenerator montierbar ist;
- Fig. 12B: das an einem Gasgenerator montierte Gewebe-Schutzelement der Fig. 12A;
- Fig. 13A: schematisch die Anordnung eines Gasgenerators mit einem an diesem montierten Gewebe-Schutzelement in einem Einfüllstutzen eines Gassacks;
- Fig. 13B: die fertig montierte Anordnung der Fig. 13A;
- Fig. 14A: ein weiteres Ausführungsbeispiel eines Gassacks mit einer zusätzlichen Verstärkungslage an der Außenseite des schlauchförmigen Bereichs;
- Fig. 14B: den Gassack der Fig. 14A, wobei die Verstärkungslage an dem schlauchförmigen Bereich befestigt ist;
- Fig. 15A: ein weiteres Ausführungsbeispiel eines Gassacks mit einer zusätzlichen Verstärkungslage an der Außenseite des schlauchförmigen Bereichs;
- Fig. 15B: den Gassack der Fig. 15A, wobei die Verstärkungslage an dem schlauchförmigen Bereich befestigt ist;
- Fig. 16: ein Ausführungsbeispiel eines als gesondertes Teil ausgebildeten schlauchförmigen Bereichs;
- Fig. 17: den schlauchförmigen Bereich der Fig. 16 nach Befestigung an einem Einfüllstutzen eines Gassacks;
- Fig. 18: einen Gassack mit einem Einfüllstutzen, der durch Umstülpen des schlauchförmigen Bereichs der Fig. 17 gebildet ist;
- Fig. 19: den Gassack der Fig. 18 mit einem in dem Einfüllstutzen angeordneten und mit diesem verbundenen Gasgenerator;
- Fig. 20: einen ausgebreiteten, nicht aufgeblasenen Seitengassack mit einem durch das Gassack-Layout gebildeten schlauchförmigen Bereich;
- Fig. 21: einen Gassack gemäß der Fig. 20, wobei der schlauchförmige Bereich als gesondertes Teil ausgebildet ist, das mit dem Gassack zusammengenäht ist;
- Fig. 22: einen Gassack mit einem Einfüllstutzen, der durch Umstülpen des schlauchförmigen Bereichs der Fig. 20 oder der Fig. 21 gebildet ist, wobei der nach innen gestülpte Bereich einen Stülp-Diffusor ausbildet;
- Fig. 23: einen Gassack gemäß der Fig. 22 mit moniertem Gasgenerator;
- Fig. 24: eine Ausgestaltung des schlauchförmigen Bereichs gemäß der Fig. 21, bei der die Stirnseite des schlauchförmigen Bereichs zugenäht ist;
- Fig. 25: den Gassack der Fig. 24 mit nach innen gestülpten, einen Stülp-Diffusor bildenden schlauchförmigen Bereich;
- Fig. 26: den Gassack der Fig. 25 mit montiertem Gasgenerator, wobei ein Gasaustritt aus dem Stülp-Diffusor nur nach vorne erfolgt;
- Fig. 27: ein Ausführungsbeispiel eines ausgebreiteten, nicht aufgeblasenen Seitengassacks, der einen aus dem Gassackzuschnitt gebildeten schlauchförmigen Bereich ausbildet, welcher zu einer Stülpung quer zur Längsachse ausgebildet und vorgesehen ist;
- Fig. 28: den Gassack der Fig. 27, wobei der schlauchförmige Bereich durch ein gesondertes Teil gebildet und mit dem Gassack zusammengenäht ist;
- Fig. 29: den Gassack der Figuren 27 oder 28, bei dem der schlauchförmige Bereich quer zur Längsachse gestülpt ist und eine Aufnahme für einen Gasgenerator bildet;
- Fig. 30: einen Ausschnitt aus dem Gassack der Fig. 29, wobei die quer nach innen gestülpten Lagen dargestellt sind;
- Fig. 31: den Gassack der Fig. 30 mit montiertem Gasgenerator; und
- Fig. 32: schematisch den Gasaustritt aus dem Gasgenerator bei der Gassackanordnung gemäß der Fig. 30.

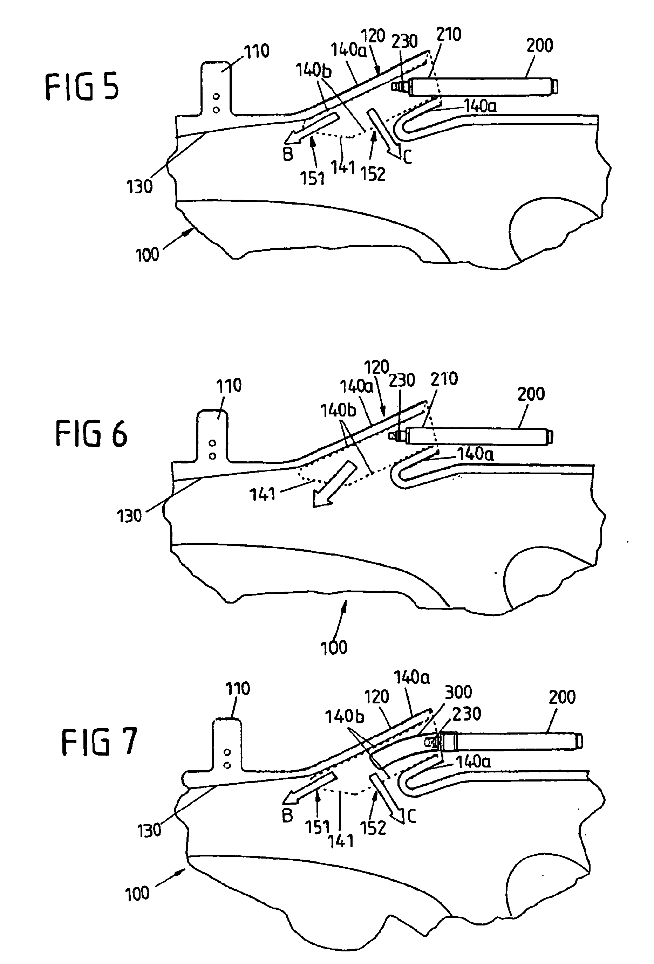

Es wird darauf hingewiesen, dass die Figuren 6, 9A bis 13B und 20 bis 32 für sich genommen keine Ausführungsbeispiele der Erfindung betreffen.

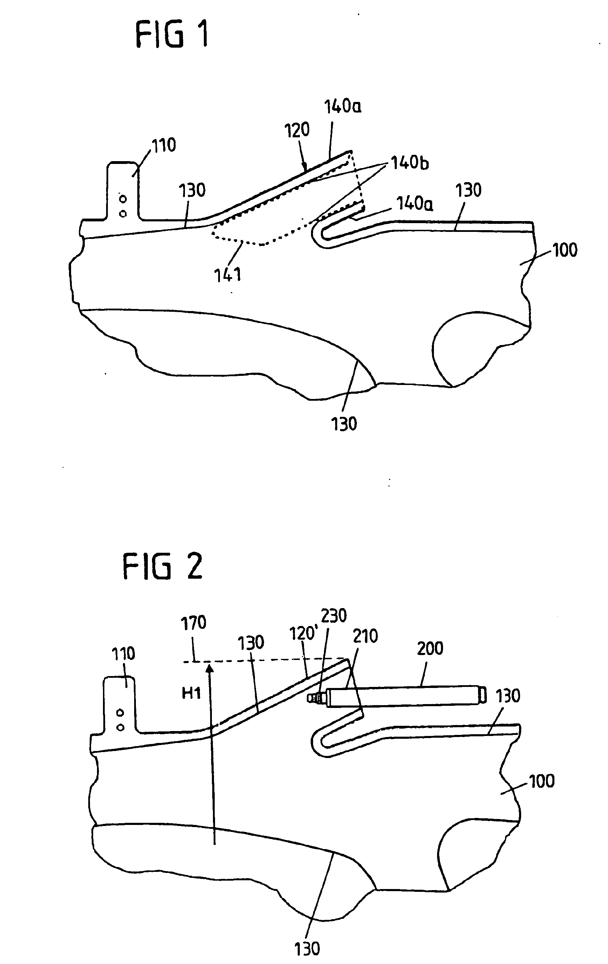

Zum besseren Verständnis der Erfindung wird zunächst anhand der Fig. 2 ein bekannter Gassack erläutert. Danach weist ein bekannter Gassack 100 einen Einfüllstutzen 120' auf, der der Aufnahme zumindest eines Teilabschnitts 210 eines Gasgenerators 200 dient, wobei der in dem Einfüllstutzen angeordnete Teilabschnitt 210 einen Gasaustrittsbereich 230 aufweist, aus dem im Auslösefall vom Gasgenerator 200 erzeugtes Gas austritt. Der Einfüllstutzen 120' ist fest an dem Gasgenerator 200 fixiert und dient dazu, das aus dem Gasgenerator 200 ausströmende Gas in das Innere des Gassacks 100 zu leiten.

Weiter sind in der Fig. 2 Nähte 130 des Gassacks, durch die eine obere Lage und eine untere Lage eines Gassackzuschnitts miteinander verbunden sind, sowie ein Befestigungslappen 110 zur Befestigung des Gassacks mit einer Fahrzeugstruktur dargestellt.

Ein zur Herstellung des Gassacks 100 erforderlicher Gassackzuschnitt besitzt definierte Abmessungen in den beiden Raumrichtungen. In der Fig. 2 ist eine Höhe H1 eines Gassackzuschnitts dargestellt, die durch den Abstand zwischen einer unteren Kante (nicht dargestellt) des Zuschnitts und einer oberen Kante 170 definiert ist, wobei die obere Kante 170 durch das obere Ende des vom eigentlichen Gassack abstehenden Einfüllstutzens 120' definiert ist. Die Höhe H1 des Gassackzuschnitts bestimmt die Menge an Gassackmaterial, die zur Herstellung des Gassacks erforderlich ist, und beeinflusst dadurch die Material- und Herstellungskosten.

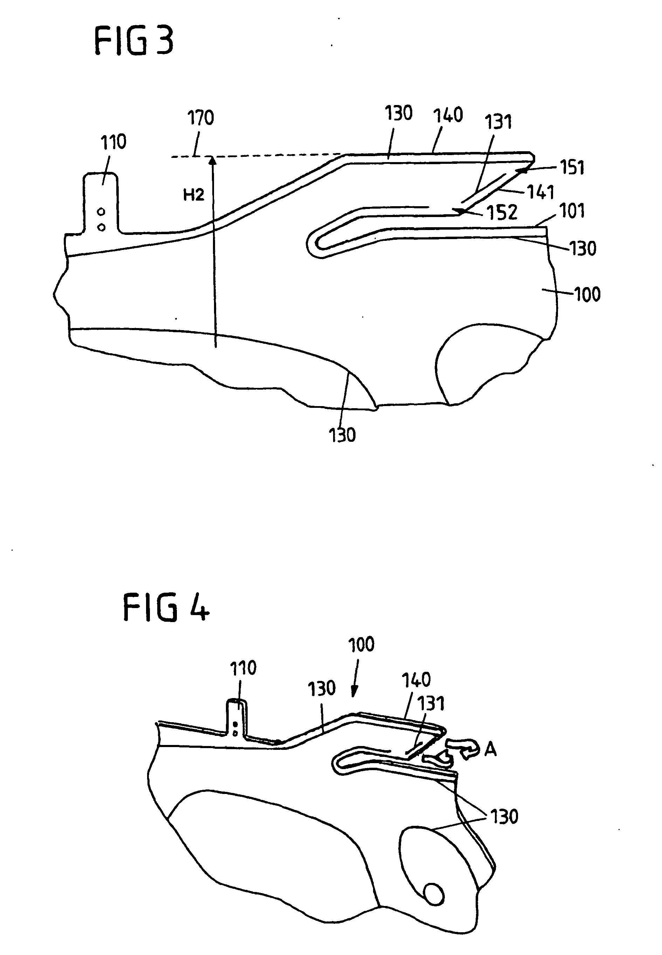

Die Fig. 1 zeigt einen Gassack 100 mit einem Einfüllstutzen 120, der durch einen nach innen gestülpten schlauchförmigen Bereich des Gassacks gebildet ist. Der Einfüllstutzen 120 besteht somit aus zwei Materiallagen 140a, 140b desselben schlauchförmigen Teils 140, das in den Figuren 3 und 4 dargestellt ist. Der Einfüllstutzen wird somit im Vergleich zu dem bekannter Einfüllstutzen 120' der Fig. 2 verlängert und der verlängerte Teil nach innen gestülpt. Der entsprechend verlängerte Einfüllstutzen wird dabei im Rahmen dieser Beschreibung als schlauchförmiger Bereich bezeichnet, um ihn von dem fertigen Einfüllstutzen 120 terminologisch zu unterscheiden.

Es liegt somit eine zusätzliche Schutzlage 140b vor, die einstückig aus dem Gassackzuschnitt gebildet ist und kein gesondertes Teil darstellt, insbesondere ohne die Notwendigkeit eines Ausschneidens, Nähens und nachträglichen Einbringens in den Gassack oder Einfüllstutzen bereitstellbar ist. Aufgrund des Herstellungsprozesses des Umstülpens eines länglichen, an seinem Ende zumindest teilweise offenen schlauchförmigen Bereichs liegt ein Einfüllstutzen 120 vor, dessen beiden Lagen am stirnseitigen Ende des Einfüllstutzens 120 stetig durch eine Falte miteinander verbunden sind und die aus dem gleichen Materialzuschnitt bestehen.

Ebenfalls dargestellt in der Fig. 3 sind Nähte 130, die eine obere und eine untere Gassacklage zur Bildung einer oder mehrerer Kammern oder Bereiche des Gassackes 100 miteinander verbinden.

Es wird darauf hingewiesen, dass der in den Figuren dargestellte Gassack ein sich entlang der seitlichen Fensterfront entfaltender Kopfairbag (side curtain) ist. Dies ist jedoch nur beispielhaft zu verstehen. Grundsätzlich können auch anders geformte und angeordnete Gassäcke mit einem gestülpten Einfüllstutzen versehen werden.

Die Fig. 3 zeigt den Gassack 100 mit einem schlauchförmigen Bereich 140 und in einem Zustand, bevor durch Umstülpen des schlauchförmigen Bereichs 140 der Einfüllstutzen 120 mit zwei Gewebelagen 140a, 140b (vgl. Fig. 1) gebildet wird. Der Gassack 100 besteht aus zwei zweidimensionalen Gassacklagen mit übereinstimmender Kontur, die über Nähte 130 miteinander verbunden sind. Anstatt einer Verbindung über Nähte 130 kann alternativ auch eine Klebverbindung erfolgen. Ebenso ist es grundsätzlich denkbar, dass ein gewebter, einteiliger Gassack eingesetzt wird.

Die beiden Gassacklagen, die den Gassack 100 bilden, weisen dabei jeweils einen sich längs erstreckenden, seitlich abstehenden Bereich auf, wobei nach einem Verbinden der beiden Gassacklagen die beiden sich längs erstreckenden, seitlich abstehenden Bereiche den schlauchförmigen Bereich 140 bilden.

In einer Ausgestaltung, jedoch nicht notwendigerweise, ist vorgesehen, dass der schlauchförmige Bereich 140 im Wesentlichen parallel zu einer sich längs erstreckenden Außenkante 101 des Gassacks verläuft. Hierdurch wird erreicht, dass die Höhe H2 des für die Herstellung des Gassacks erforderlichen Gassackzuschnitts gegenüber der Höhe eines Gassackzuschnitts für einen bekannten Gassack gemäß der Fig. 2 nicht vergrößert werden muss, d. h. die Höhe H2 der Fig. 3 ist gleich der Höhe H1 der Fig. 2. Da die Höhe des Gassackzuschnitts durch die Bereitstellung eines gestülpten Einfüllstutzens nicht zunimmt, entstehen keine zusätzlichen Materialkosten. In anderen Ausgestaltungen kann dagegen vorgesehen sein, dass der schlauchförmige Bereich 140 winklig in Bezug auf die benachbarte Außenkante 101 des Gassacks verläuft.

Das dem Gassack 100 in der Fig. 3 abgewandte Ende 141 des schlauchförmigen Bereichs 140 kann eine oder mehrere Nähte aufweisen, die Öffnungen definieren, die bei einer Befüllung des Gassacks das einströmende Gas gezielt im Gassack verteilen. Dabei ist zu beachten, dass nach Umstülpen des schlauchförmigen Bereichs das Ende 141 dem Gassackinneren zugewandt ist.

In dem Ausführungsbeispiel der Fig. 3 ist eine Naht 131 am Ende 141 des schlauchförmigen Bereichs 140 vorgesehen, die zwei Gasaustrittsöffnungen 151, 152 definiert. Die untere Gasaustrittsöffnung 152 erstreckt sich dabei teilweise seitlich, d. h. ein Gasaustritt erfolgt senkrecht zur Längsachse des schlauchförmigen Bereichs 140. Die in der Fig. 3 dargestellte Naht 131 und die Gasaustrittsöffnungen 151, 152 sind nur beispielhaft zu verstehen. Es können ein oder mehrere Nähte auch in anderer Weise am Ende 141 oder seitlich am schlauchförmigen Bereich 140 ausgebildet sein, wobei jeweils

Öffnungen bereitgestellt werden, die aus dem Gasgenerator austretende Gase gerichtet und gezielt in den Gassack einströmen lassen, um eine gleichmäßige Befüllung des Gassacks und/oder eine gezielte Befüllung einzelner Kammern des Gassackes zu erreichen.

Die Fig. 4 deutet durch die Pfeile A den Schritt des Umstülpens des schlauchförmigen Bereichs 140 an. Der nach Umstülpen des schlauchförmigen Bereichs bereitgestellte Einfüllstutzen ist in der Fig. 1 dargestellt.

Die Fig. 5 zeigt den Gassack gemäß der Fig. 1 zusammen mit einem Gasgenerator 200 und unter Darstellung der Einleitungswege B, C des einströmenden Gases in den Gassack 100. Der Gasgenerator 200 ist mit einem Abschnitt 210, der einen Gasaustrittsbereich 230 des Gasgenerators umfasst, in dem Einfüllstutzen 120 angeordnet. Die Verbindung des Einfüllstutzens 120 mit dem Gasgenerator 200 erfolgt in üblicher Weise. Im Auslösefall tritt Gas aus dem Gasaustrittsbereich 230 aus und in den Einfüllstutzen 120 ein. Die austretenden Gase geraten dabei allein in Kontakt mit der inneren Schutzlage 140b, die durch den nach innen gestülpten Teil des schlauchförmigen Bereichs der Fig. 3 gebildet ist. Hierdurch wird verhindert, dass das aus dem Gasgenerator 200 ausströmende Gas die Außenhaut des Gassacks beschädigt. Von der inneren Schutzlage 140b wird das Gas dann durch die Gasaustrittsöffnungen 151, 152 in zwei Teilströmen B, C gerichtet in den Gassack 100 geleitet. Durch Größe und Anzahl der Öffnungen kann der Lufteintritt in den Gassack gesteuert werden, wobei vorgesehen sein kann, dass unterschiedliche Kammern des Gassackes in unterschiedlicher Weise mit Gas befüllt werden.

Der Einfüllstutzen 120 wirkt aufgrund seiner Gasverteilungsfunktion als Diffusor und kann als auch Stülp-Diffusor bezeichnet werden. Der Stülp-Diffusor 120 ist dabei kein gesondertes Teil, sondern aus dem Gassackzuschnitt des Gassackes hergestellt.

Die Fig. 6 zeigt ein Beispiel, das sich hinsichtlich des Gaseintritts in das Gassackinnere von der Ausgestaltung der Fig. 5 unterscheidet. So ist bei dem Beispiel der Fig. 6 die umgestülpte Schutzlage 140b an ihrem Ende oder Stirnbereich 141 mit nur einer Öffnung versehen, so dass die Schutzlage 140b keine gesonderte Gasverteilungsfunktion erfüllt.

Die Fig. 7 zeigt ein Ausführungsbeispiel, bei dem in dem Einfüllstutzen 120 ein zusätzlicher Diffusor 300 angeordnet ist, der wiederum mit einem Gasgenerator 200 verbunden ist. Das aus dem Diffusor 300 austretende Gas strömt dann entsprechend der Fig. 5 gerichtet in Gasströmen B, C durch die Gasaustrittsöffnungen 151, 152 in den Gassack 100. Die Verwendung eines Diffusors 300 kann beispielsweise auch in Kombination mit der Ausgestaltung der Fig. 6 erfolgen.

Es wird darauf hingewiesen, dass das Ende 141 der inneren Schutzlage 140b in den dargestellten Ausgestaltungen angeschrägt ist, d. h. nicht senkrecht zur Längsachse des Einfüllstutzens 120 verläuft. Über die Anschrägung des Endes 141 der inneren Schutzlage 140b kann zusätzlich Einfluss auf die Strömungsrichtung der in den Gassack eintretenden Gase genommen werden. Eine Anschrägung des Endes 141 der inneren Schutzlage ist jedoch nur beispielhaft vorgesehen und keineswegs zwingend.

Bei dem in den Figuren dargestellten Gasgenerator 200 handelt es sich um einen langgestreckt ausgebildeten Gasgenerator, beispielsweise um einen Rohrgasgenerator. Die Verwendung eines Gassacks mit einem gestülpten Einfüllstutzen ist jedoch auch in Verbindung mit anderen Gasgeneratoren möglich, ggf. unter zusätzlicher Verwendung eines Diffusors, wie beispielhaft in der Fig. 7 dargestellt.

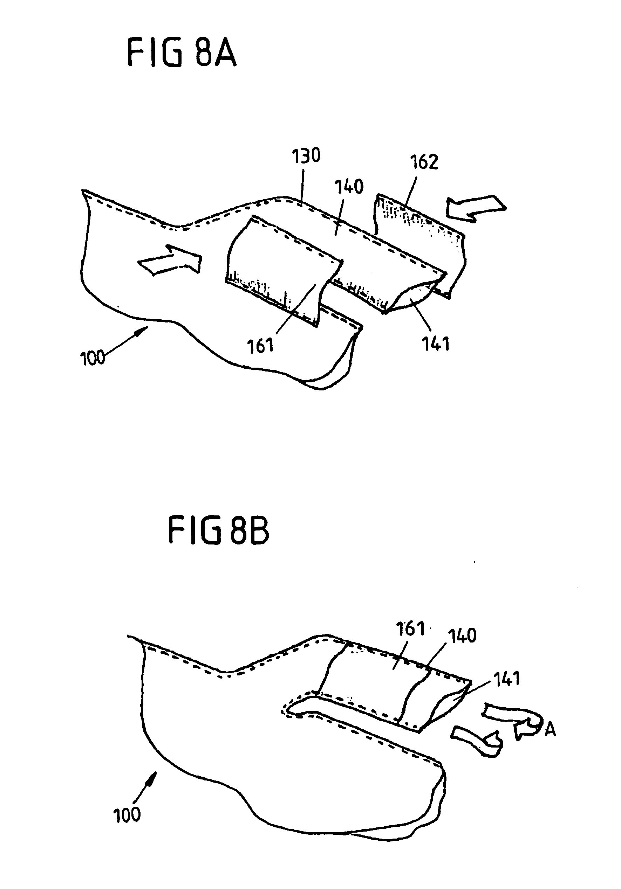

Die Figuren 8A bis 8D zeigen ein Ausführungsbeispiel, bei dem an dem schlauchförmigen Bereich 140 eine zusätzliche Verstärkungslage befestigt ist, die beim Umstülpen zumindest teilweise ebenfalls umgestülpt wird. Gemäß der Fig. 8A besteht die zusätzliche Verstärkungslage beispielsweise aus zwei Gewebestücken 161, 162, wobei jeweils ein Gewebestück auf die Oberseite und die Unterseite des schlauchförmigen Bereichs 140 genäht oder geklebt wird.

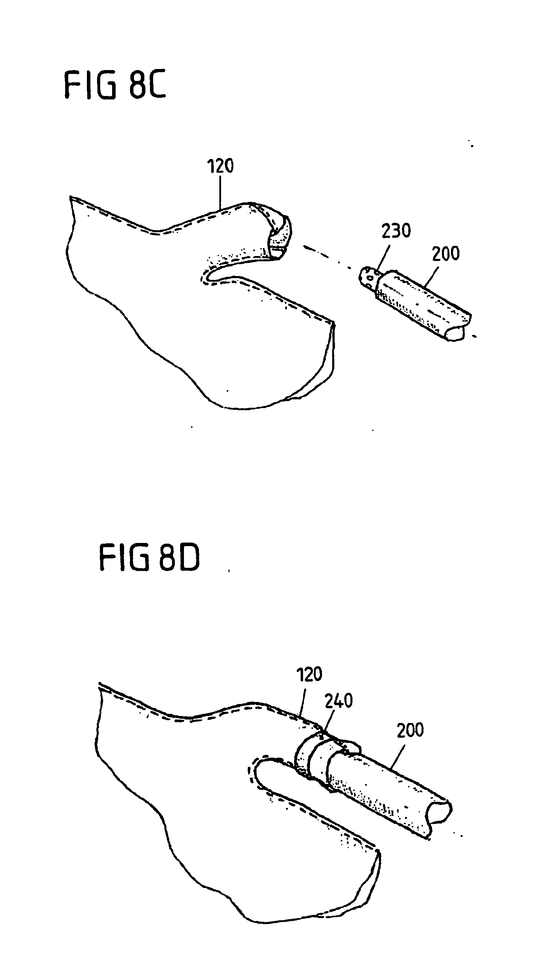

Die Fig. 8B zeigt den schlauchförmigen Bereich 140 mit den daran befestigten Verstärkungs-Gewebestücken 161. Nach Befestigen der Verstärkungslagen 161, 162 wird der schlauchförmige Bereich 140 wiederum nach innen umgestülpt, wie durch die Pfeile A angedeutet. Dabei werden die Verstärkungslagen 161, 162 zumindest teilweise ebenfalls umgestülpt. Das Ergebnis ist in der Fig. 8C dargestellt. Die zusätzlichen Verstärkungslagen 161, 162 bilden die innerste Schutzlage des Einfüllstutzens 120 und schützen den Gassack 100 weitergehend vor ausströmenden Gasen. Ein langgestreckter Gasgenerator 200 mit einem Gasaustrittsbereich 230 wird in den Einfüllstutzen 120 eingeführt und an diesem gemäß der Fig. 8D befestigt. Die Befestigung erfolgt beispielsweise über eine Schelle 240, die einen kragenförmigen Bereich des Gasgenerators 200 und den Einfüllstutzen 120 im Wesentlichen gasdicht umschließt.

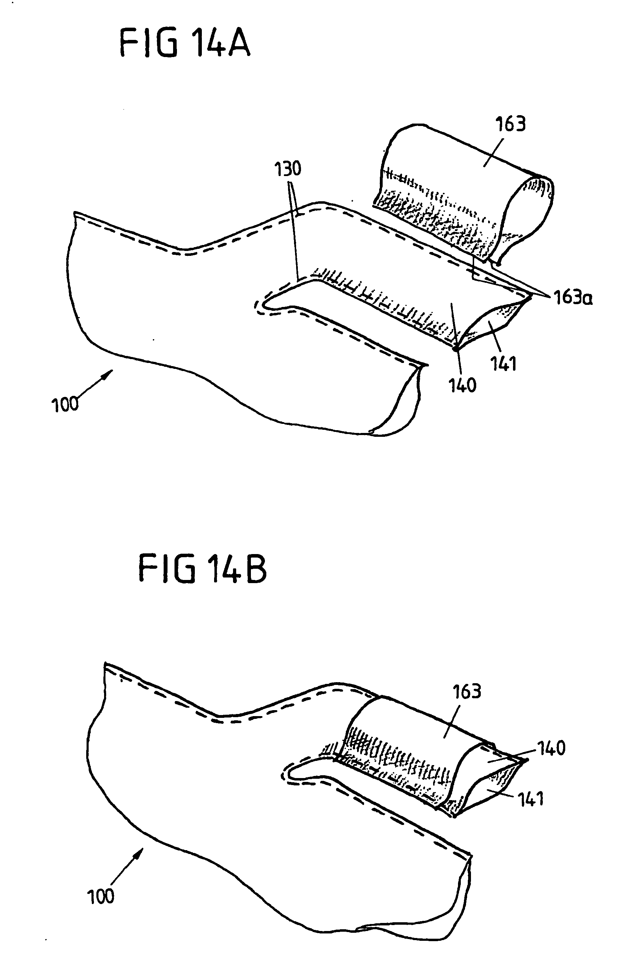

Die Figuren 14A, 14B betreffen eine Abwandlung des Ausführungsbeispiels der Figuren 8A bis 8D, bei dem die zusätzliche Verstärkungslage aus einem rechteckförmigen Gewebestück 163 besteht, das um den schlauchförmigen Bereich 140 umgelegt und an seinen Enden 163a mit dem schlauchförmigen Bereich vernäht oder verklebt ist. Die Befestigung der Enden 163a der Verstärkungslage 163 am schlauchförmigen Bereich 130 erfolgt dabei bevorzugt im Bereich der Nähte 130 des schlauchförmigen Bereichs 140. Die Figur 14B zeigt den fertig montierten schlauchförmigen Bereich 140 mit daran befestigter Verstärkungslage 163. Der auf diese Weise ausgebildete schlauchförmige Bereich 140 wird anschließend zusammen mit der Verstärkungslage 163 nach innen umgestülpt, entsprechend der Darstellung der Figuren 8C und 8D.

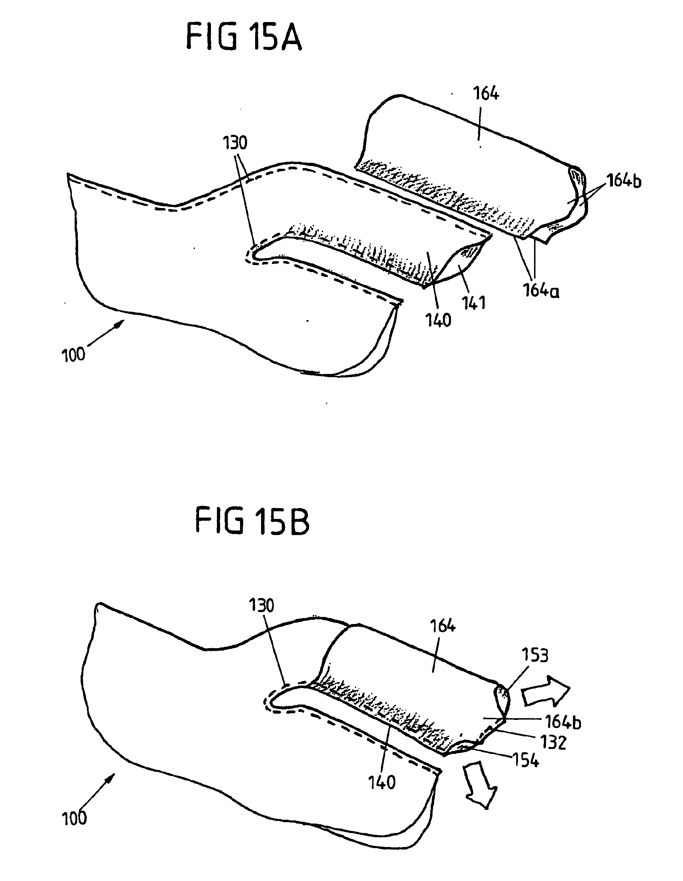

Die Figuren 15A, 15B zeigen eine weitere Abwandlung eines Ausführungsbeispiels, bei dem an dem schlauchförmigen Bereich 140 eine zusätzliche Verstärkungslage befestigt ist. Die zusätzliche Verstärkungslage besteht ebenso wie beim Ausführungsbeispiel der Figuren 14A, 14B aus einem Gewebestück 164, das um den schlauchförmigen Bereich 140 gelegt und an seinen Enden 164a mit diesem vernäht oder verklebt ist. Es könnte jedoch ebenso eine Ausgestaltung entsprechend den Figuren 8A, 8B mit zwei gesonderten Gewebestücken vorliegen. Das Gewebestück 164 weist dabei an seiner dem Gassackinneren abgewandten Stirnseite zwei vorstehende Bereiche 164b auf.

Anders als bei den Ausführungsbeispielen der Figuren 14A, 14B und 8A, 8B ist die Verstärkungslage 164 auch stirnseitig entlang einer Naht 132 vernäht oder verklebt, und zwar entlang der vorstehenden Bereiche 164b, so dass das Ende 141 des schlauchförmigen Bereichs 140 teilweise verschlossen ist. Anschließend an die miteinander vernähten oder verklebten vorstehenden Bereiche 164b sind dabei zwei Gasaustrittsöffnungen 153, 154 gebildet, aus denen Gas austreten kann. Nach Umstülpen des schlauchförmigen Bereiches 140 entsprechend den Figuren 8C, 8D sind diese Öffnungen 153, 154 dem Gassackinneren zugewandt. Durch die beiden Gasausströmöffnungen 153, 154 ist eine gezielte Befüllung des Gassacks mit Gas möglich. Durch Länge und Form der Naht 132 können dabei Größe und Lage der Gasaustrittsöffnungen 153, 154 beeinflusst und damit die Befüllung des Gassacks mit Gas gezielt eingestellt werden. Auch ist es möglich, dass mehrere stirnseitige Nähte an der Verstärkungslage vorgesehen sind.

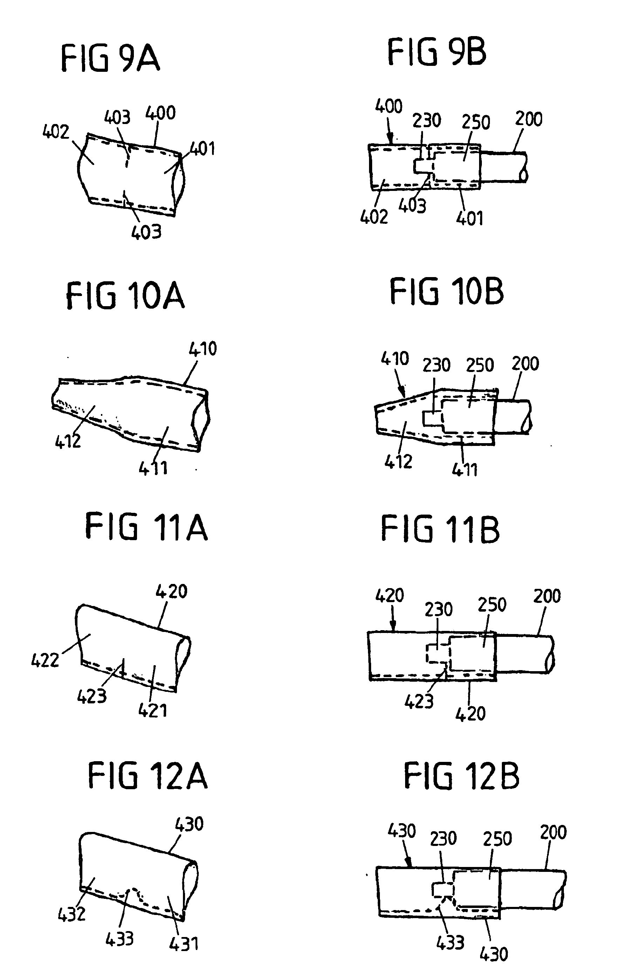

Die Figuren 9A bis 13B betreffen Beispiele eines Gassacks, bei denen der Gasaustrittsbereich eines Gasgenerators von einem am Gasgenerator montierten Gewebe-Schutzelement zumindest teilweise umgeben ist, wobei ein Abschnitt des Gasgenerators zusammen mit dem Gewebe-Schutzelement in dem Einfüllstutzen des Gassacks angeordnet ist. Der Einfüllstutzen kann dabei entsprechend den Figuren 1 und 3 bis 8D ein gestülpter Einfüllstutzen sein. Die Verwendung eines am Gasaustrittsbereich angeordneten Gewebe-Schutzelements ist jedoch auch in Kombination mit einlagigen Einfüllstutzen möglich.

Gemäß der Fig. 9A ist ein Gewebe-Schutzelement 400 schlauchförmig mit zwei offenen Enden ausgebildet. Es bildet einen ersten Teilbereich 401 und einen zweiten Teilbereich 402, die sich in Längsrichtung aneinander anschließen. In dem ersten Teilbereich 401 ist gemäß der Fig. 9 ein Abschnitt 250 eines langgestreckt ausgebildeten Gasgenerators 200 angeordnet, der einen Gasaustrittsbereich 230 umfasst.

Zwischen dem ersten Teilbereich 401 und dem zweiten Teilbereich 402 sind zwei senkrecht zur Längsrichtung des Gewebe-Schutzelementes 400 verlaufende Nähte 403 vorgesehen, wobei die Nähte 403 dazu dienen, den im ersten Teilbereich 401 gemäß der Fig. 9B angeordneten Abschnitt 250 des Gasgenerators 200 dort zu fixieren. Dabei kann vorgesehen sein, dass der Gasaustrittsbereich 230 durch eine durch die beiden Nähte 403 gebildete Öffnung hindurchragt.

In den Figuren 10A und 10B ist ein zweites Beispiel eines Gewebe-Schutzelementes 410 dargestellt. Auch dieses weist einen ersten Teilbereich 411 und einen zweiten Teilbereich 412 auf. Der zweite Teilbereich 412 ist durch einen sich verjüngenden Querschnitt gekennzeichnet. Durch den sich verjüngenden Querschnitt des zweiten Teilbereichs 412 wird sichergestellt, dass der Abschnitt 250 des Gasgenerators 200, der in dem ersten Teilbereich 411 angeordnet ist, im ersten Teilbereich 411 fixiert ist.

Der sich verjüngende zweite Teilbereich 412 stellt darüber hinaus eine Düse für den austretenden Gasstrom zur Verfügung. Allgemein kann über die Form des zweiten Teilbereichs des Gewebe-Schutzelementes Einfluss auf Richtung und Geschwindigkeit des Gasstroms genommen werden.

In einem dritten Beispiel gemäß den Figuren 11A, 11B ist ein schlauchförmiges Element 420 vorgesehen, das durch ein im Wesentlichen rechteckiges Gewebestück gebildet ist, das einmal gefaltet ist und dessen der Faltung gegenüberliegenden Kanten über ein Naht miteinander verbunden sind. Es ist wiederum eine senkrecht verlaufende Naht 423 vorgesehen, die den ersten Teilbereich 421, der den Abschnitt 250 des Gasgenerators 200 mit dem Gasaustrittsbereich 230 umfasst, von dem zweiten Teilbereich 422 trennt. Das Beispiel der Figuren 12A, 12B entspricht im Wesentlichen dem Beispiel der Figuren 11 A, 11 B, wobei hier jedoch die Naht, die den ersten Teilbereich 431 von dem zweiten Teilbereich 432 trennt, durch eine Ausbuchtung 433 der Randnaht des Gewebe-Schutzelementes 430 gebildet ist.

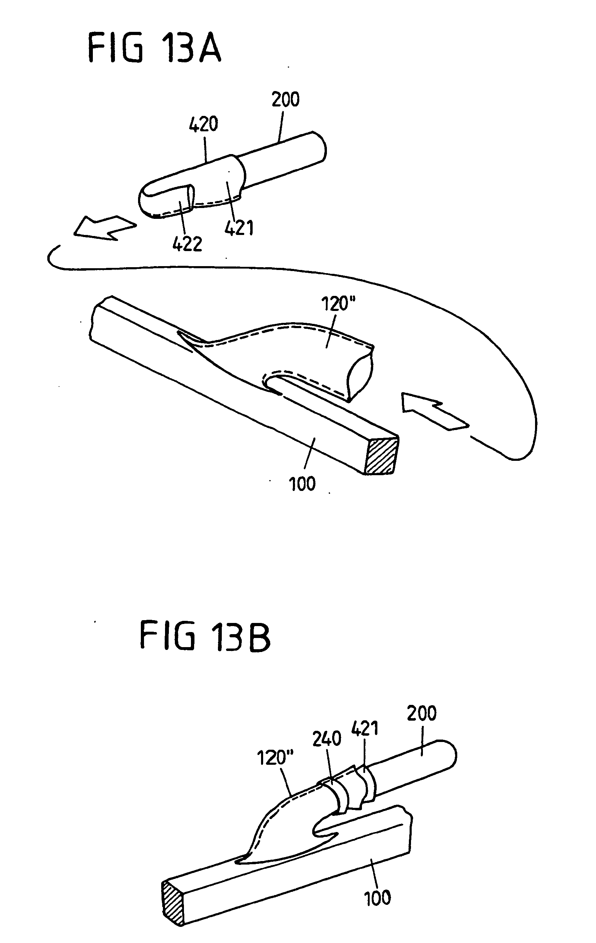

Gemäß der Fig. 13A ist zur Montage eines mit einem derartigen Gewebe-Schutzelement versehenen Generatorendes in einem Einfüllstutzen 120" eines Gassackes vorgesehen, dass der zweite Teilbereich 422 vor dem Einführen in den Einfüllstutzen 120" seitlich zurückgeklappt wird. Hierdurch wird die Wucht des initial aus dem Gasgenerator 200 austretenden Gases im Auslösefall reduziert, da das Gas erst den umgeklappten Bereich 422 aufrichten muss. Ein Zurückklappen des zweiten Teilbereichs 422 erfolgt aber nur beispielhaft und nicht notwendigerweise. Beispielsweise kann der zweite Teilbereich auch ungeordnet in den Einfüllstutzen 120" eingeführt werden.

Nach Anordnen des Abschnitts 250 des Gasgenerators 200, der den Gasaustrittsbereich 230 sowie das unmittelbar den Gasaustrittsbereich 230 umgebende Gewebe-Schutzelement 420 umfasst, in dem Einfüllstutzen 120" wird der Einfüllstutzen 120" beispielsweise über eine Schelle 240 im Wesentlichen luftdicht mit dem Gasgenerator 200 verbunden und an diesem fixiert.

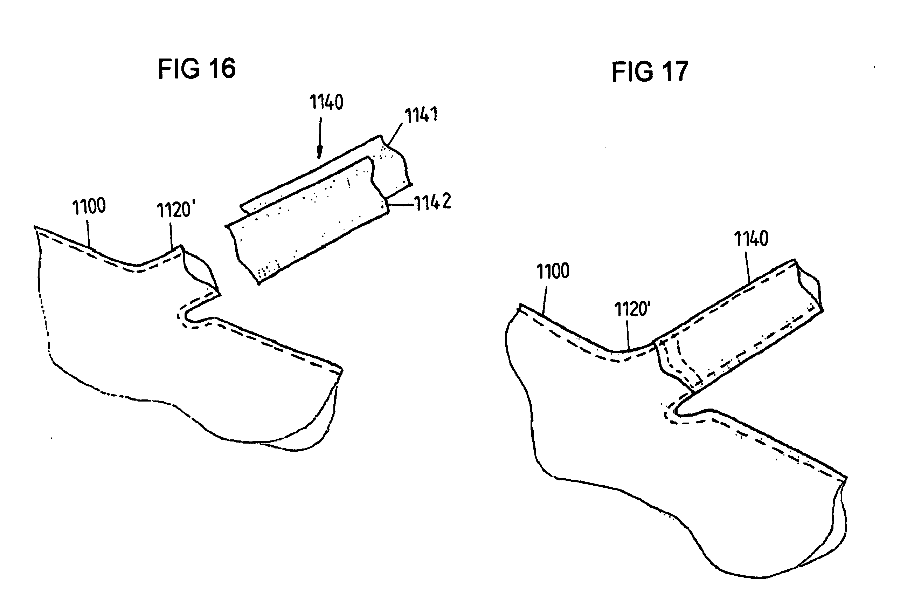

Die Fig. 16 zeigt ein Ausführungsbeispiel, bei dem ein schlauchförmiger Bereich 1140, der nach Umstülpen einen Einfüllstutzen eines Gassacks 1100 bildet, als gesondertes Teil ausgebildet ist. Er besteht dabei beispielsweise aus zwei Gewebezuschnitten 1141, 1142, die an ihren Längsseiten miteinander vernäht oder anderweitig verbunden werden. Gemäß der Fig. 17 wird der schlauchförmige Bereich 1140 an einem Einfüllstutzenstummel 1120' mit dem Gassack 1100 befestigt, insbesondere mit diesem vernäht, geklebt oder ähnliches.

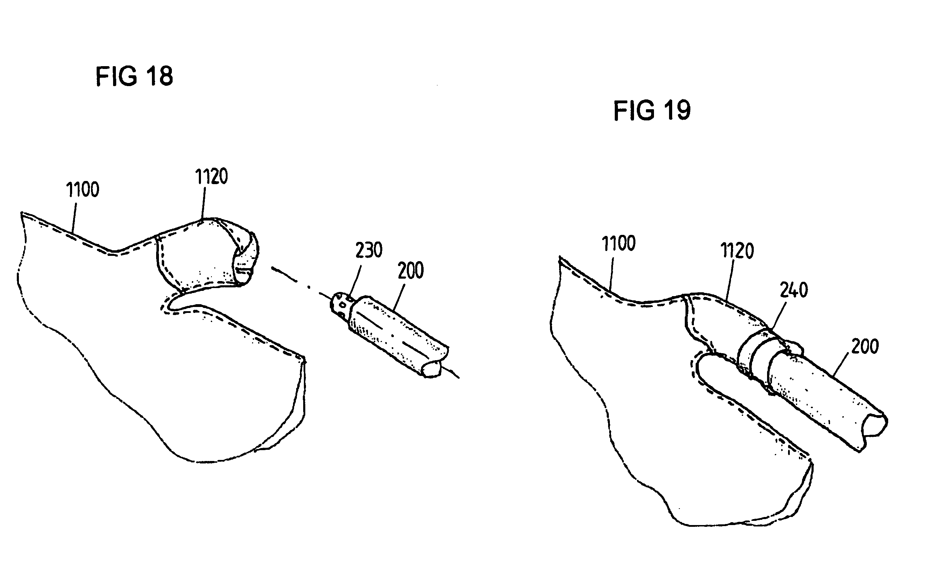

Nach dem Stülpen kommen gemäß der Fig. 18 die durch den schlauchförmigen Bereich 1140 gebildeten zusätzlichen Verstärkungslagen nach innen, um den Gassack 1100 vor den ausströmenden Gasen zu schützen. Es wird ein gestülpter Einfüllstutzen 1120 bereitgestellt. Ein langgestreckter Gasgenerator 200 mit einem Gasaustrittsbereich 230 wird nachträglich montiert und hierzu in den Einfüllstutzen 1120 eingeführt und an diesem gemäß der Fig. 19 befestigt. Die Befestigung erfolgt dabei beispielsweise über eine Schelle 240, die einen kragenförmigen Bereich des Gasgenerators 200 und den Einfüllstutzen 1120 im Wesentlichen gasdicht umschließt.

Durch die in den Figuren 16 bis 19 beschriebene Ausbildung des Einfüllstutzens als gesondertes Teil, das mit dem eigentlichen Gassack verbunden wird, eröffnet sich die Möglichkeit, den Einfüllstutzen aus einem stärkeren Material zu bilden. Hierdurch kann eine zusätzliche Verstärkung wie sie beispielsweise in den Figuren 8A und 8B beschrieben ist, vermieden werden.

Es wird darauf hingewiesen, dass der gestülpte schlauchförmige Bereich 1140 nach dem Stülpvorgang einen Gewebe-Diffusor bildet, der das aus dem Gasgenerator 200 austretende Gas gezielt im Gassack verteilt. Bei dem Beispiel der Figuren 16 bis 19 wird das Gas durch die offene Stirnseite des schlauchförmigen Bereichs 1140 in den Gassack geleitet. Wie in Bezug auf die Fig. 3-5 erläutert, können jedoch in gezielter Weise ein oder mehrere Öffnungen in dem schlauchförmigen Bereich definiert sein, die bei einer Befüllung des Gassacks das einströmende Gas gezielt im Gassack verteilen. Der gestülpte schlauchförmige Bereich wird im Rahmen der vorliegenden Beschreibung auch als Stülp-Diffusor bezeichnet.

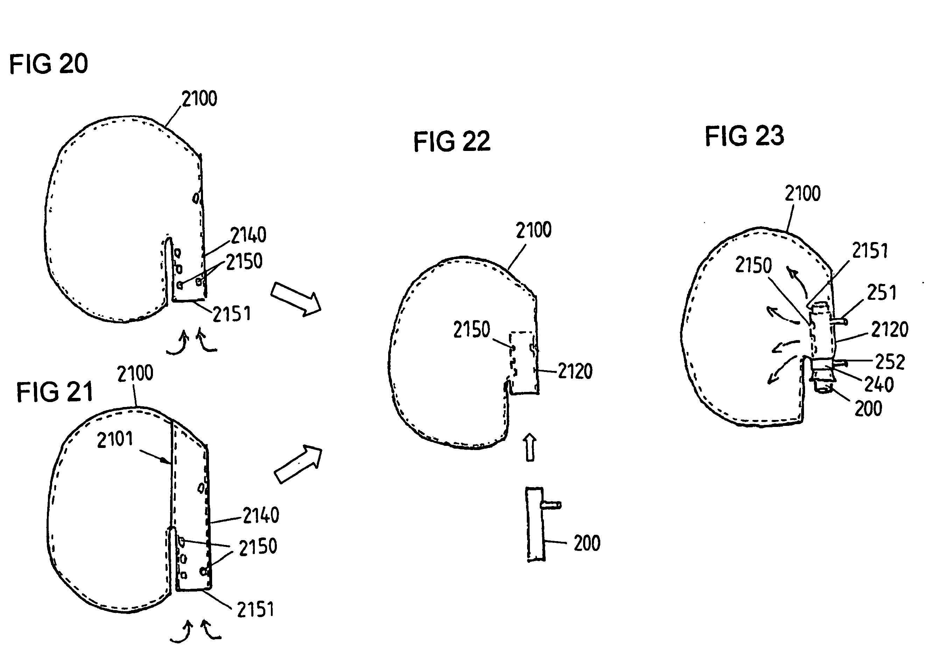

Die Figuren 20 bis 26 zeigen Beispiele, bei denen ein Stülp-Diffusor an einem Gassack 2100 realisiert ist, der für den Einsatz bei Seitenairbags vorgesehen ist. Bei entsprechender Ausbildung des Gassackmunds kann eine entsprechende Ausbildung jedoch ebenso bei anderen Gassacktypen, insbesondere bei Kopf-Airbags, erfolgen.

Gemäß der Fig. 20 ist wiederum ein schlauchförmiger Bereich 2140 vorgesehen. In der Ausgestaltung der Fig. 20 ist der schlauchförmige Bereich 2140, der nach Umstülpen einen Stülp-Diffusor bildet, aus dem Gassackzuschnitt gebildet. In der Fig. 21 ist der schlauchförmige Bereich 2140 als Extrateil ausgebildet und nachträglich mit dem Gassack 2100 verbunden. Der schlauchförmige Bereich 2140 ist dabei an eine sich längs erstreckende Außenkante 2101 des Gassacks 2100 angenäht und erstreckt sich parallel zu dieser.

In beiden Varianten sind im Gewebe des schlauchförmigen Bereichs 2140 eine Mehrzahl von Gasaustrittsöffnungen 2150 in definierter Position realisiert. Im dargestellten Ausführungsbeispiel sind diese Gasaustrittsöffnungen 2150 durch runde Öffnungen bereitgestellt. Alternativ können sie auch durch Unterbrechungen der Randnaht gebildet sein. Zusätzlich bildet die Stirnseite des schlauchförmigen Bereich 2140 eine Gasaustrittsöffnung 2151.

Die Fig. 22 zeigt den umgestülpten schlauchförmigen Bereich, der im Gassack einen Einfüllstutzen und Gewebe-Diffusor 2120 bildet. Ebenfalls erkennbar sind die Ausströmöffnungen 2150, die eine Gasverteilungsfunktion erfüllen.

Anschließend wird gemäß der Fig. 23 ein langgestreckter Gasgenerator 200 in den auf die beschriebene Weise realisierten Einfüllstutzen 2120 eingesetzt. Die Montage kann beispielsweise mittels zweier Bolzen 251, 252 und/oder mittels einer zusätzlichen Schelle 240 erfolgen. Der Gasaustritt aus dem Stülp-Diffusor 2120 erfolgt gezielt über die Gasaustrittsöffnungen 2150 sowie die stirnseitige Öffnung 2151.

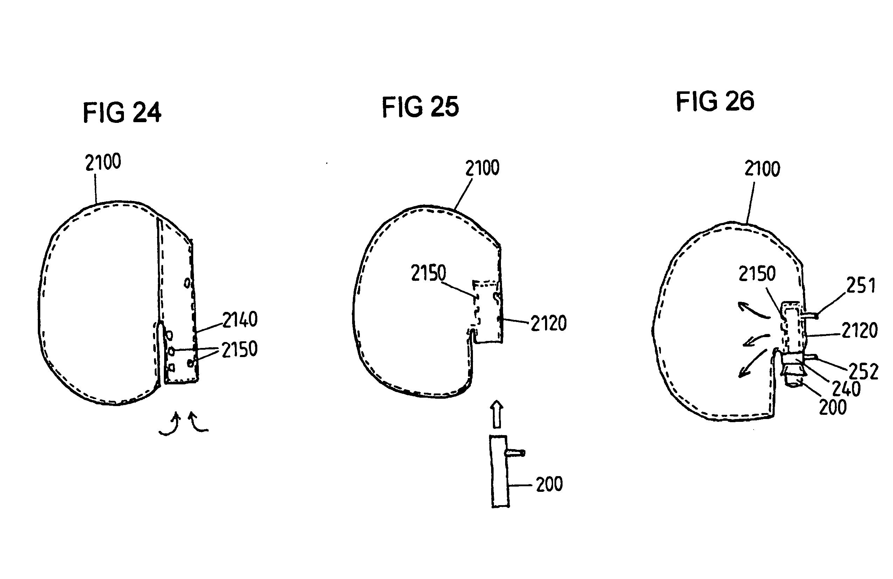

Die Fig. 24 zeigt ein Beispiel, bei dem die Stirnseite des schlauchförmigen Bereichs 2140 anders als bei den Figuren 20, 21 zugenäht ist. Demgemäß kann nach Umstülpen (Fig. 25) und Befestigung des Gasgenerators (Fig. 26) ein Gasaustritt nicht mehr über die Stirnseite, sondern nur noch in Richtung des Gassacks 2100 nach vorne, also senkrecht zur Längsrichtung des Stülp-Diffusors 2120 erfolgen, mittels der Gasaustrittsöffnungen 2150. Grundsätzlich kann der Gasaustritt durch die Gasaustrittsöffnungen 2150 dabei beliebig in unterschiedliche Richtungen gesteuert werden. Die Gasgeneratoreinheit 200 kann wiederum mittels zweier Bolzen 251, 252 und/oder mittels einer zusätzlichen Schelle 240 mit dem Luftsack verbunden werden.

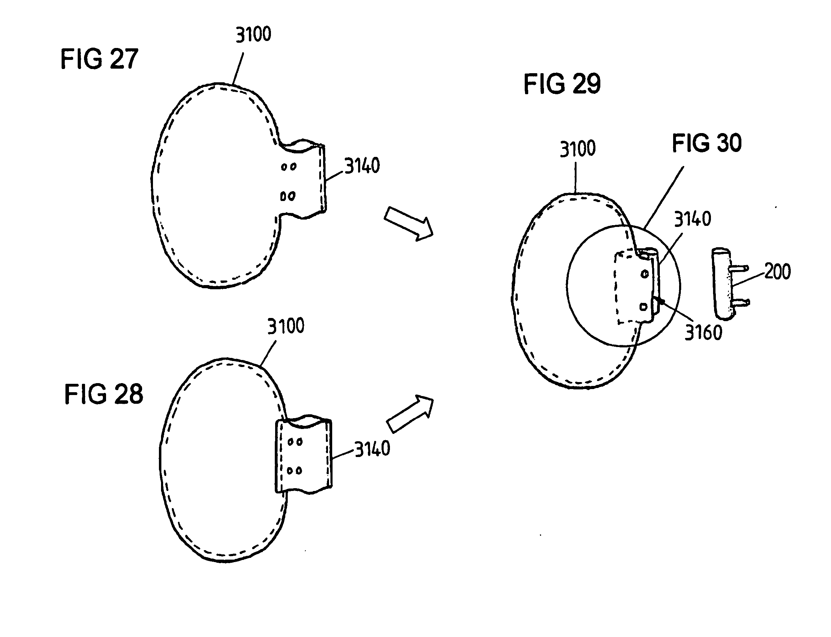

Die Figuren 27 bis 32 zeigen ein Beispiel des Gassacks, bei dem eine Stülpung in Querrichtung eines an beiden Enden offenen und an einer Längsseite mit einem Gassack 3100 verbundenen schlauchförmigen Bereichs 3140 erfolgt, der vor seiner Stülpung von dem Gassack 3100 absteht und nach dem Stülpen einen Aufnahmebereich für einen Gasgenerator bildet. Ein solcher Stülp-Diffusor kann wiederum entweder aus dem Luftsack-Layout ausgeformt werden oder aus zusätzlichen Lagen gebildet sein, die dann nachträglich mit dem Gassack verbunden werden. Die erste Variante ist in der Fig. 27 gezeigt, die zweite Variante in der Fig. 28.

Gemäß der Fig. 29 wird der schlauchförmige Bereich 3140, anders als bei den bisher dargestellten Ausführungsbeispielen, nicht in Längsrichtung gestülpt, sondern in Querrichtung. Der dadurch entstandene längliche Aufnahmebereich 3160 dient der Aufnahme eines langgestreckten Gasgenerators 200.

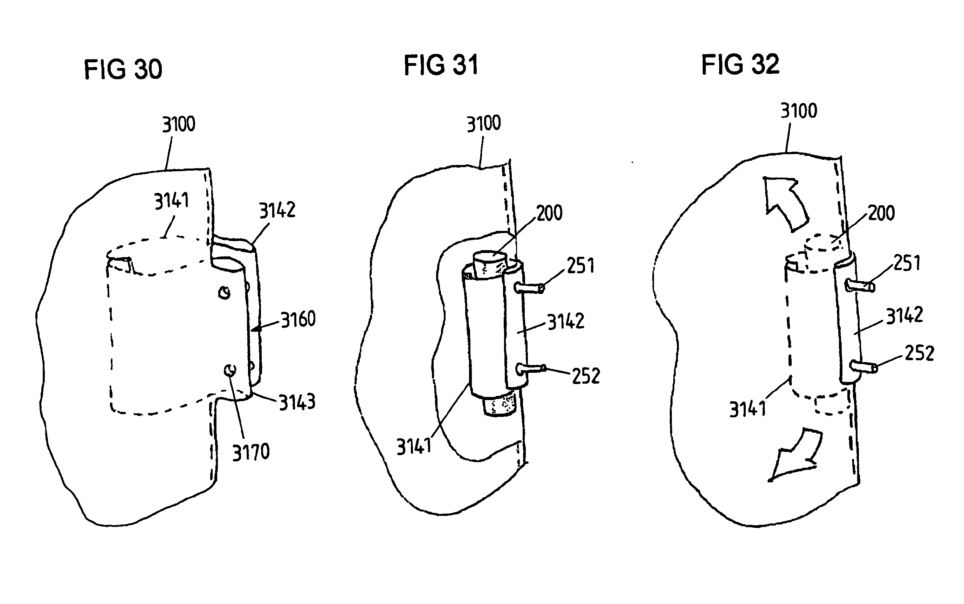

Der Stülp-Vorgang ist in der vergrößerten Darstellung der Fig. 30 genauer erkennbar. Der schlauchförmige Bereich 3140 ist durch die Querstülpung nach innen gestülpt und bildet dort einen im wesentlichen zylinderförmigen Gewebe-Diffusor 3141. Gewebebereiche, die nicht nach innen gestülpt sind, bilden dabei zwei Lappen 3142, 3143 aus, die aufeinander klappbar sind.

Öffnungen 3170 des schlauchförmigen Bereichs 3140 im Bereich der Lappen 3142, 3143, die also an einem nicht nach innen gestülpten Bereich des schlauchförmigen Bereichs 3140 ausgebildet sind, dienen der Verbindung der Lappen 3142, 3143 miteinander und der Verbindung mit einem Gasgenerator 200, wie in den Figuren 31 und 32 dargestellt.

Nach dem Stülp-Vorgang wird ein Gasgenerator 200 montiert. Zur Montage wird der Gasgenerator 200 in den länglichen Aufnahmebereich 3160 eingesetzt. Anschließend werden die Lappen 3142, 3143 aufeinandergeklappt, so dass sie den Gasgenerator 200 umschließen, und erfolgt eine Fixierung durch mit dem Gasgenerator 200 verbundene Bolzen 251, 252 sowie die Öffnungen 3170, vgl. Fig. 31.

Ein Gasaustritt kann gemäß der Fig. 32 nach oben und nach unten erfolgen. Bei Ausbildung von Gasaustrittsöffnungen im zylinderförmigen Gewebe-Diffusor 3141, etwa entsprechend der Ausgestaltungen der Figuren 24 bis 26, kann jedoch auch ein Gasaustritt senkrecht dazu, also nach vorne in den Gassack 3100 hinein realisiert werden.

In den beschriebenen Ausführungsbeispielen kann der mit dem Gassack zusätzlich verbundene Stülp-Diffusor aus einem anderen Material oder aus einem anderen, insbesondere stärkeren Luftsackgewebe hergestellt sein, um aufwändige gesonderte Verstärkungslagen zu vermeiden. Der Luftsackzuschnitt kann in diesem Fall optimiert werden, um die beste Materialausnutzung erzielen zu können. Mit dem Stülp-Diffusor kann die Gasverteilung im Gassack gezielt gesteuert werden. Hierdurch können die Gase gerichtet in den Gassack strömen und eine gewünschte Befüllung des Gassacks gewährleisten.

Die Erfindung beschränkt sich in ihrer Ausgestaltung nicht auf die vorstehend dargestellten Ausführungsbeispiele. Beispielsweise sind Variationen im Hinblick auf Art und Form des Gassacks, das Vorhandensein einer oder mehrerer gesonderter Gassackkammern, der Form und Länge des Einfüllstutzens sowie in Bezug auf die verwendeten Gasgeneratoren möglich. Der beschriebene Gassack kann in Verbindung mit beliebigen Gassackmaterialien und beliebigen Modulbauformen eingesetzt werden. Insbesondere können die gezeigten Diffusor-Varianten sowohl für Seitenairbags als auch für Kopfairbags genutzt werden.

## Patentansprüche

1. Gassack mit einem Einfüllstutzen (120), über den der Gassack (100) mit dem Gas eines Gasgenerators (200) befüllbar ist, wobei der Einfüllstutzen (120) durch Stülpen eines schlauchförmigen Bereichs (140) des Gassacks (100) in Längsrichtung gebildet ist, wobei
- ein oder mehrere Nähte seitlich oder am Ende (141) des schlauchförmigen Bereichs (140), das nach dessen Stülpen dem Gassackinneren zugewandt ist, ausgebildet sind, die mehrere Gasaustrittsöffnungen (151, 152) definieren, wobei diese Gasaustrittsöffnungen bei einer Befüllung des Gassacks (100) das einströmende Gas gezielt im Gassack (100) verteilen, wobei
- die mehreren Gasaustrittsöffnungen eine oder mehrere seitliche Gasaustrittsöffnungen (152) aufweisen, wobei
- bei einer Befüllung des Gassacks (100) das einströmende Gas durch die mehreren Öffnungen in genau zwei Teilströmen gerichtet in den Gassack geleitet wird,
**dadurch gekennzeichnet, dass**
am Ende (141) des schlauchförmigen Bereichs (140) mindestens eine Naht (131) ausgebildet ist, die zwei Gasaustrittsöffnungen (151, 152) definiert, und dass das Ende (141) des schlauchförmigen Bereichs (140) durch diese mindestens eine Naht (131) zumindest teilweise verschlossen ist.

2. Gassack nach Anspruch 1, **dadurch gekennzeichnet, dass** das Ende (141) des schlauchförmigen Bereichs (140), das nach dessen Stülpen dem Gassackinneren zugewandt ist, bis in das Gassackinnere reicht.

3. Gassack nach Anspruch 1 oder 2, **dadurch gekennzeichnet, dass** die Öffnungen (151, 152) durch ein oder mehrere Nähte definiert sind oder durch Löcher im schlauchförmigen Bereich (140).

4. Gassack nach einem der vorangehenden Ansprüche, **dadurch gekennzeichnet, dass** der Gassack (100) eine sich längs erstreckende Außenkante (101) besitzt und der umzustülpende Teil des schlauchförmigen Bereichs (140) vor seinem Umstülpen im wesentlichen parallel zu der Außenkante (101) verläuft.

5. Gassack nach einem der vorangehenden Ansprüche, **dadurch gekennzeichnet, dass** das Ende (141) des schlauchförmigen Bereichs (140), das nach dessen Umstülpen dem Gassackinneren zugewandt ist, angeschrägt ist.

6. Gassack nach einem der vorangehenden Ansprüche, **dadurch gekennzeichnet, dass** an dem schlauchförmigen Bereich (140) mindestens eine zusätzliche Verstärkungslage (161, 162, 163, 164) befestigt ist, die beim Umstülpen zumindest teilweise ebenfalls umgestülpt wird.

7. Gassack nach Anspruch 6, **dadurch gekennzeichnet, dass** die mindestens eine zusätzliche Verstärkungslage zwei Gewebestücke (161, 162) umfasst, wobei jeweils ein Gewebestück (161, 162) auf die Oberseite und die Unterseite des schlauchförmigen Bereichs (140) genäht oder geklebt ist.

8. Gassack nach Anspruch 6, **dadurch gekennzeichnet, dass** die mindestens eine zusätzliche Gewebelage (163) ein Gewebestück umfasst, das um den schlauchförmigen Bereich (140) gelegt und an seinen Enden (163a) mit diesem vernäht oder verklebt ist.

9. Gassack nach einem der Ansprüche 6 bis 8, **dadurch gekennzeichnet, dass** Bereiche (164b) der mindestens einen zusätzlichen Gewebelage (164) derart miteinander verbunden sind, so dass sie das Ende (141) des schlauchförmigen Bereichs (140) teilweise verschließen, wobei die nicht verschlossenen Bereiche eine oder mehrere Öffnungen (153, 154) bilden, die bei einer Befüllung des Gassacks das einströmende Gas gezielt im Gassack verteilen.

10. Gassack nach einem der vorangehenden Ansprüche, **dadurch gekennzeichnet, dass** der Einfüllstutzen (120) und der schlauchförmige Bereich (140) integraler Bestandteil des Gassacks sind.

11. Gassack nach einem der vorangehenden Ansprüche, **dadurch gekennzeichnet, dass** der gestülpte schlauchförmige Bereich (140) in das Gassackinnere reicht und dort einen Diffusor ausbildet, der Gas eines Gasgenerators gezielt im Gassack verteilt.

## Claims

1. Airbag having a filling piece (120), via which the airbag (100) can be filled with the gas of a gas generator (200), wherein the filling piece (120) is formed by everting a tubular area (140) of the airbag (100) in the longitudinal direction, wherein
- one or several seams are formed lateral by or at the end (141) of the tubular area (140) facing the airbag interior after having been everted seams which define several gas outlet openings (151, 152), wherein these gas outlet openings distribute the inflowing gas in a targeted manner in the airbag (100) during filling the airbag (100), wherein
- the several gas outlet openings comprise one or several lateral gas outlet openings (152), wherein
- during filling the airbag (100) the inflowing gas is guided through the several openings in exactly two partial streams directed into the airbag (100),
**characterized**
**in that** at least one seam (131) is formed at the end (141) of the tubular area (140) which defines two gas outlet openings (151, 152) and in that the at least one seam (131) closes the end (141) of the tubular area (140) at least partially.

2. Airbag according to claim 1, **characterized in that** the end (141) of the tubular area (140), facing the airbag interior after having been everted reaches into the airbag interior.

3. Airbag according to claim 1 or 2, **characterized in that** the openings (151, 152) are defined by one or several seams or by holes in the tubular area (140).

4. Airbag according to any of the preceding claims, **characterized in that** the airbag (100) possesses an outer edge (101) extending longitudinally and **in that** the part of the tubular area (140) to be everted extends essentially parallel to the outer edge (101) before being everted.

5. Airbag according to any of the preceding claims, **characterized in that** the end (141) of the tubular area (140) facing the airbag interior after having been everted is bevelled.

6. Airbag according to any of the preceding claims, **characterized in that** at least one additional reinforcing layer (161, 162, 163, 164) is secured to the tubular area (140), the at least one additional reinforcing layer (161, 162, 163, 164) being at least partially also everted when the tubular area (140) is everted.

7. Airbag according to claim 6, **characterized in that** the at least one additional reinforcing layer comprises two fabric pieces (161, 162) wherein one fabric piece (161, 162) is sewed or glued to the upper side and one fabric piece (161, 162) is sewed or glued to the lower side of the tubular area (140).

8. Airbag according to claim 6, **characterized in that** the at least on additional fabric layer (163) comprises a fabric piece which is laid around the tubular area (140) and is sewed or glued at its ends (163a) to the tubular area (140).

9. Airbag according to any of claims 6 to 8, **characterized in that** areas (164b) of the at least one additional fabric layer (164) are connected to each other in such a way that they partially close the end (141) of the tubular area (140), wherein the non-closed areas form one or more openings (153, 154) which distribute the inflowing gas in the airbag in a targeted manner during filling the airbag.

10. Airbag according to any of the preceding claims, **characterized in that** the filling piece (120) and the tubular area (140) are an integral component of the airbag.

11. Airbag according to any of the preceding claims, **characterized in that** the everted tubular area (140) reaches into the airbag interior and there forms a diffuser which distributes gas of a gas generator in a targeted manner in the airbag.

## Revendications

1. Coussin à gaz avec un manchon de remplissage (120) par l'intermédiaire duquel le coussin à gaz (100) peut être rempli avec le gaz d'un générateur de gaz (200), dans lequel le manchon de remplissage (120) est formé en retournant une partie en forme de tuyau (140) du coussin à gaz (100) dans le sens longitudinal, dans lequel
- une ou plusieurs coutures sont réalisées sur le côté ou à l'extrémité (141) de la partie en forme de tuyau (140), orientée, après avoir été retournée, vers l'intérieur du coussin à gaz, qui définissent plusieurs ouvertures de sortie du gaz (151, 152), dans lequel ces ouvertures de sortie du gaz répartissent de manière ciblée le gaz entrant lors d'un remplissage du coussin à gaz (100), dans lequel
- les plusieurs ouvertures de sortie du gaz comprennent une ou plusieurs ouvertures de sortie du gaz latérales (152), dans lequel
- lors d'un remplissage du coussin à gaz (100), le gaz entrant est guidé à travers les plusieurs ouvertures en exactement deux écoulements partiels dans le coussin à gaz,
**caractérisé en ce que**
à l'extrémité (141) de la partie en forme du tuyau (140), au moins une coutures (131) est formée, qui définit deux ouvertures de sortie du gaz (151, 152) et **en ce que** l'extrémité (141) de la partie en forme de tuyau (140) et au moins partiellement fermée par cette couture (131).

2. Coussin à gaz selon la revendication 1, **caractérisé en ce que** l'extrémité (141) de la partie en forme de tuyau (140) orientée, après avoir été retournée, vers l'intérieur du coussin à gaz dépasse à l'intérieur du coussin à gaz.

3. Coussin à gaz selon la revendication 1 ou 2, **caractérisé en ce que** les ouvertures (151, 152) sont définies par une ou plusieurs coutures ou par des trous dans la partie en forme de tuyau (140).

4. Coussin à gaz selon l'une des revendications précédentes, **caractérisé en ce que** le coussin à gaz (100) possède une arête externe (101) s'étendant longitudinalement et la partie à retourner de la partie en forme de tuyau (140) est globalement parallèle à l'arête externe (101) avant être retournée.

5. Coussin à gaz selon l'une des revendications précédentes, **caractérisé en ce que** l'extrémité (141) de la partie en forme de tuyau (140), orientée, après avoir été retournée, vers l'intérieur du coussin à gaz est biseautée.

6. Coussin à gaz selon l'une des revendications précédentes, **caractérisé en ce que**, sur la partie en forme de tuyau (140), est fixée au moins une couche de renfort supplémentaire (161, 162, 163, 164), qui est également au moins partiellement retournée quand la partie enforme de tuyau (140) est retournée.

7. Coussin à gaz selon la revendication 6, **caractérisé en ce que** l'au moins une couche de renfort supplémentaire comprend deux pièces de tissu (161, 162), dans lequel une pièce de tissu (161, 162) est cousue ou collée sur chacun des côtés inférieur et supérieur de la partie en forme de tuyau (140).

8. Coussin à gaz selon la revendication 6, **caractérisé en ce que** l'au moins une couche de tissu supplémentaire (163) comprend une pièce de tissu qui est posée autour de la partie en forme de tuyau (140) et est cousue ou collée avec celle-ci au niveau de ses extrémités (163a).

9. Coussin à gaz selon l'une des revendications 6 à 8, **caractérisé en ce que** des parties (164b) de l'au moins une couche de tissu supplémentaire (164) sont reliées entre elles de façon à ce qu'elles ferment partiellement l'extrémité (141) de la partie en forme de tuyau (140), dans lequel les parties non fermées forment une ou plusieurs ouvertures (153, 154) qui lors du remplissage du coussin à gaz répartissent de manière ciblée le gaz entrant dans le coussin à gaz.

10. Coussin à gaz selon l'une des revendications précédentes, **caractérisé en ce que** le manchon de remplissage (120) et la partie en forme de tuyau (140) font partie intégrante du coussin à gaz.

11. Coussin à gaz selon l'une des revendications précédentes, **caractérisé en ce que** la partie en forme de tuyau retournée (140) dépasse à l'intérieur du coussin à gaz et y forme un diffuseur qui répartit de manière ciblée le gaz provenant d'un générateur de gaz dans le coussin à gaz.
